(19) Europäisches Patentamt
European Patent Office
Office européen des brevets

(11) Veröffentlichungsnummer: **0 013 439**
**B1**

(12) **EUROPÄISCHE PATENTSCHRIFT**

(45) Veröffentlichungstag der Patentschrift: **26.05.82**

(51) Int. Cl.³: **C 08 F 8/32,** C 08 G 18/62, C 08 G 59/32

(21) Anmeldenummer: **79105414.1**

(22) Anmeldetag: **31.12.79**

(54) **Verwendung Hydroxyl- und tertiäre Aminogruppen enthaltendes niedermolekulares Acrylatharze als Vernetzer für Polyisocyanate.**

(30) Priorität: **09.01.79 DE 2900592**

(43) Veröffentlichungstag der Anmeldung: **23.07.80 Patentblatt 80/15**

(45) Bekanntmachung des Hinweises auf die Patenterteilung: **26.05.82 Patentblatt 82/21**

(84) Benannte Vertragsstaaten: **AT BE DE FR GB IT NL SE**

(56) Entgegenhaltungen:
**DE-A-2 325 177**
**DE-B-2 659 853**

(73) Patentinhaber: **BAYER AG, Zentralbereich Patente, Marken und Lizenzen, D-5090 Leverkusen 1, Bayerwerk (DE)**

(72) Erfinder: **Probst, Joachim, Dr., Wolfskaul 1, D-5000 Koeln 80 (DE)**
Erfinder: **Sonntag, Michael, Dr., Gartenstrasse 27a, D-5068 Odenthal (DE)**
Erfinder: **Kolb, Günter, Dr., Heinrich-von-Kleist-Strasse 7, D-5090 Leverkusen (DE)**

**EP 0 013 439 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verwendung Hydroxyl- und tertiäre Aminogruppen enthaltendes niedermolekulares Acrylatharz als Vernetzer für Polyisocyanate

Gegenstand der vorliegenden Erfindung ist die Verwendung fremdvernetzbarer, Hydroxylgruppen und tertiäre Aminogruppen aufweisender niedermolekularer Acrylatharze mit relativ geringer molekularer Uneinheitlichkeit als Vernetzungskomponente für mehr als eine Isocyanatgruppen aufweisende bzw. liefernde Verbindung.

Aus der Literatur [B. Rånby, Journal of Polymer Science, Polymer Letters Ed., Band 15, S. 687-692 (1977)] ist bekannt, dass Polyhydroxypolyacrylate durch Umsetzung von Glycidylmethacrylateinheiten enthaltenden Copolymerisaten mit Diethanolamin erhalten werden können (vgl. auch US-A-2 949 445). Als Comonomer wird dabei Methacrylsäuremethylester eingesetzt. Die so dargestellten Copolymeren werden als Antistatika eingesetzt. Beim Einsatz ähnlicher mit Diethanolamin hergestellter hydroxyhaltiger Polymerisate als Lackbindemittel im Gemisch mit geeigneten marktüblichen Polyisocyanaten ist die im allgemeinen sehr kurze Standzeit (pot life) sowie die schlechte Verdünnbarkeit mit Aromaten, wie z.B. Toluol oder Xylol, von Nachteil.

Aus der DE-A-2 325 177 ist es weiter bekannt, mit Alkanolaminen, z.B. Diisopropanolamin, modifizierte Glycidyl(meth)acrylatcopolymerisate — die mit den gemäss vorliegender Anmeldung einzusetzenden Umsetzungsprodukten aus Glycidyl(meth)acrylatcopolymerisat und Alkanolaminen identisch sein können — durch Zusatz von Säuren in in Wasser dispergierbare bzw. in Wasser lösliche Harze zu überführen und diese dann als elektrolytisch abscheidbare, wässrige Anstrichmittel einzusetzen. Ein Hinweis auf eine Reaktion der mit sekundären Alkanolaminen modifizierten Glycidyl(meth)acrylatcopolymerisate mit Isocyanaten kann dieser Schrift nicht entnommen werden.

Zwar ist es allgemein bekannt (vgl. DE-B-2 659 853), stickstofffreie, primäre und sekundäre Hydroxylgruppen enthaltende Acrylatcopolymerisate in Kombination mit Isocyanaten als Überzugsmittel einzusetzen, wobei zur Reaktions- und Trocknungsbeschleunigung niedermolekulare Beschleuniger wie tert. Amine verwendet werden, was jedoch meistens zur Herabsetzung der Wasser- und Lösungsmittelbeständigkeit des ausgehärteten Lackes führt. Ausgehend von diesem Stand der Technik konnte jedoch nicht erwartet werden, dass die Umsetzungsprodukte aus Glycidylgruppen enthaltenden Acrylatharzen und sekundären Alkanolaminen mit sekundären Hydroxylgruppen, die einen Beschleuniger eingebaut enthalten, mit Isocyanaten Mischungen mit praxisgerechten Standzeiten ergeben, die eine gute Aromatenverträglichkeit aufweisen, denn strukturell ähnliche Umsetzungsprodukte aus Acrylatharzen mit Glycidylgruppen und sekundären Alkanolaminen mit primären Hydroxylgruppen ergeben mit Isocyanaten Mischungen, die weder aromatenverträglich sind noch praxisgerechte Standzeiten besitzen.

Gegenstand der vorliegenden Erfindung ist daher die Verwendung von Umsetzungsprodukten aus einem Acrylatharz aus copolymerisierten, statistisch verteilten Einheiten von

A) 3-30 Gew.-% des Glycidylesters der Acrylsäure od. Methacrylsäure bzw. Vinylglycidylether oder deren Mischungen;

B) 0-20 Gew.-% eines Hydroxyalkylesters der Acrylsäure oder Methacrylsäure mit 2 bis 4 C-Atomen im Hydroxyalkylester oder deren Mischungen;

C) 5-80 Gew.-% Styrol, α-Methylstyrol, o-Chlorstyrol, p-Chlorstyrol, o-, m- oder p-Methylstyrol, p-tert.-Butylstyrol, Methacrylsäuremethylester, Acrylnitril oder Methacrylnitril oder deren Mischungen;

D) 5-70 Gew.-% eines Acrylsäureesters mit 1 bis 12 C-Atomen im Alkoholrest oder eines Methacrylsäureesters mit 2 bis 12 C-Atomen im Alkoholrest oder deren Mischungen;

E) 0-10 Gew.-% einer α,β-monoolefinisch ungesättigten Mono- oder Dicarbonsäure mit 2 bis 5 C-Atomen oder eines Maleinsäuremonoesters mit 2 bis 14 C-Atomen im Alkoholrest oder deren Mischungen mit mindestens einem Hydroxylgruppen tragenden Amin der Formel

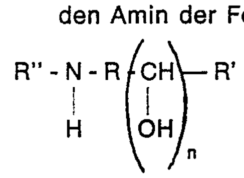

worin

n = 1 bis 4,

R = eine Alkylengruppen mit 1-4 C-Atomen,

R' = Alkyl mit 1-4 C-Atomen,

R'' = Alkyl mit 1-4 C-Atomen oder 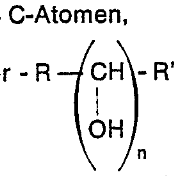

R und R' zusammen mit 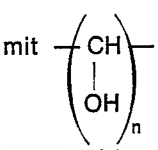 einen acyclischen 5- oder 6gliedrigen Ring

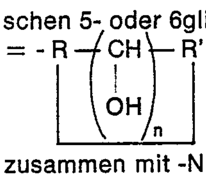 und

R' und R'' zusammen mit 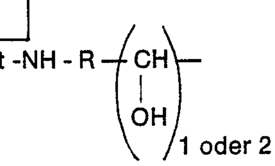

einen Pyrrolidin- oder Piperidinring bedeuten,

wobei ein Epoxidäquivalent des Acrylatharzes mit 0,7 bis 1 NH-Äquivalent des Hydroxylgruppen tragenden Amins bei 50 bis 200°C unter weitgehender Erhaltung der OH-Funktion reagiert haben, als Vernetzungskomponente für Verbindungen, die mehr als eine Isocyanatgruppe tragen bzw. zu bilden vermögen.

Vorzugsweise handelt es sich bei den Acrylatharzen um Copolymerisate aus copolymerisierten, statistisch verteilten Einheiten von

| | | |
|---|---|---|
| A) | 3-25 Gew.-% | Glycidylmethacrylat, Glycidylacrylat oder deren Mischungen; |
| B) | 0-15 Gew.-% | 2-Hydroxyethylacrylat 2-Hydroxyethylmethacrylat 2-Hydroxypropylacrylat 2-Hydroxypropylmethacrylat 4-Hydroxybutyl(meth)acrylat oder deren Mischungen |
| C) | 5-60 Gew.-% | Styrol, Acrylnitril oder Methylmethacrylat oder deren Mischungen; |
| D) | 10-60 Gew.-% | Ethylacrylat, n-Butylacrylat, n-Butylmethacrylat, 2-Ethylhexylacrylat oder 2-Ethylhexylmethacryalt oder deren Mischungen und |
| E) | 0- 5 Gew.-% | Acrylsäure oder Methacrylsäure. |

Vorzugsweise sind die eingesetzten Hydroxylgruppen enthaltenden Amine Hydroxyalkylamine der Formel

$$HO-\overset{R'}{\overset{|}{C}}H-R-NH-R-\overset{R'}{\overset{|}{C}}H-OH$$

worin

R eine Alkylengruppe mit 1-2 C-Atomen und

R' eine Alkylgruppe mit 1-2 C-Atomen bedeutet.

Vorzugsweise enthalten die Umsetzungsprodukte aus Acrylatharz und Hydroxylgruppen enthaltendem Amin 0,8 bis 0,95 NH-Äquivalente des Amins auf 1 Epoxidäquivalent des Acrylatharzes.

Unter 1 Epoxidäquivalent wird die Menge Acrylatharz in Gramm verstanden, in der eine 1,2-Epoxidgruppe (= 1 Glycidylgruppe) enthalten ist.

Unter 1 NH-Äquivalent wird die Mengen Amin in Gramm verstanden, die durch den Quotienten aus dem Molgewicht des Amins und der Anzahl der an Amin-Stickstoff gebundenen Wasserstoffatome gegeben ist.

Die Herstellung der Acrylatharze kann durch Polymerisation nach üblichen Verfahren, z.B. gemäss DE-A-2 703 311 oder DE-A-2 460 329 durchgeführt werden, bevorzugt in Lösung oder Substanz. Als Lösungsmittel kommen beispielsweise Aromaten wie Benzol, Toluol, Xylol, Chlorbenzol, Ester wie Butylacetat, Ethylacetat, Ethylglykolacetat, Methylglykolacetat, Ether wie Butylglykol, Tetrahydrofuran, Dioxan, Ethylglykolether, Ketone wie Aceton, Methylethylketon, halogenhaltige Lösungsmittel wie Methylenchlorid oder Trichlormonofluoräthan in Betracht. Geeignete Initiatoren zur Herstellung der Polyacrylatharze sind solche Verbindungen, deren Halbwertszeiten des Radikalzerfalls bei 80-160°C zwischen 0,01 und 100 Minuten liegen. Im allgemeinen erfolgt die Copolymerisationsreaktion im zuletztgenannten Temperaturbereich, vorzugsweise zwischen 100°C und 160°C, unter einem Druck von $10^3$ bis $2.10^4$ mbar, wobei sich die genaue Temperatur nach der Art des Initiators richtet. Die Initiatoren werden in Mengen von 0,05 bis 6 Gew.-%, bezogen auf die Gesamtmenge an Monomeren, eingesetzt. Im allgemeinen werden die eingesetzten Monomeren zu mindestens 98% umgesetzt.

Geeignete Initiatoren sind z.B. aliphatische Azoverbindungen wie Azoisobutyronitril sowie Peroxide wie z.B. Benzoylperoxid, tert.-Butylperpivalat, tert.-Butylperoktoat, tert.-Butylperbenzoat, tert.-Butylhydroperoxid, Di-tert.-butylperoxid, Cumolhydroperoxid sowie Dicyclohexyl- und Dibenzylperoxydicarbonat.

Die Monomeren werden im wesentlichen in den gleichen Verhältnissen, wie zur Polymerisation eingesetzt, in das Copolymerisat eingebaut, wobei die einpolymerisierten Einheiten im wesentlichen statistisch verteilt sind.

Die Acrylatpolymerisate haben mittlere Molgewichte $M_n$ von 1000 bis 10 000, vorzugsweise 2000 bis 6000, und ihre Lösungen in Xylol und/oder n-Butylacetat besitzen bei 20°C eine Viskosität von ca. 10 bis $10^4$ mPa.s, je nach Konzentration.

Die Umsetzung der Acrylharze mit den Hydroxylgruppen tragenden Aminen erfolgt zweckmässigerweise bei 50 bis 200°C, vorzugsweise bei 70 bis 120°C. Das molare Verhältnis Amin : Oxirangruppen liegt dabei zwischen 1 : 1 und 1,3 : 1, d.h. für die Umsetzung werden auf 1 Epoxidäquivalent des Acrylatharzes 1 bis 13 NH-Äquivalente des Amins eingesetzt.

Der Verlauf der Reaktion kann durch Extraktion und Titration des freien Amins mit Salzsäure sowie durch Bestimmung des Stickstoffgehalts des Copolymerisats erfolgen. Es muss hierbei ein formelmässiger Umsatz von mindestens ca. 70% — bezogen auf die Oxirangruppen — erreicht werden, um vernünftige Standzeiten über 15 Stunden (bei Raumtemperatur bestimmt) und klare Lösungen der Bindemittelmischungen zu erhalten.

Während die Reaktion unter und bei 70°C recht langsam vonstatten geht und man oft erst nach mehr als 24 Std. bis zu 90% Formelumsatz gelangt, ist bei 90°C und darüber schon nach wenigen Stunden derselbe Umsetzungsgrad erreicht. Die Viskosität der Polymerlösung steigt dabei im Reaktionsverlauf um etwa eine Zehnerpotenz auf etwa $10^3$ bis $10^5$ mPa.s je nach Festigkeit an. Nicht umgesetztes Amin kann im Reaktionsgut verbleiben.

Die mittels Dampfdruckosmometrie oder Gelpermeationschromatographie bestimmten Molekulargewichte liegen im allgemeinen bei 1000 bis 10 000, vorzugsweise 2000 bis 6000. Die OH-Zahlen liegen im Bereich von 20 bis 250, vorzugsweise 50 bis 150 (mgKOH/g Substanz).

Es ist wesentlich, dass die eingesetzten Amine

eine sekundäre Aminogruppe und mindestens eine sekundäre Hydroxylgruppe besitzen. Liegen nämlich statt sekundärer primäre Aminogruppen vor, so ergeben sich bei der Umsetzung mit Glycidylgruppen enthaltenden Polyacrylaten sehr leicht intermolekulare Verzweigungen und Vernetzungen, die zu gelierten Produkten führen können. Ausserdem ist das Vorliegen von sekundären Hydroxylgruppen von ausschlaggebender Bedeutung, da hierdurch unerwünschte Nebenreaktionen der Hydroxyl- mit den Oxirangruppen des Präpolymeren weitgehend verhindert werden. Ausserdem ist durch die Anwesenheit der sekundären Hydroxylgruppen die Reaktionsfähigkeit mit den als Vernetzerkomponente eingesetzten Polyisocyanaten so sehr eingeschränkt, dass man zu guten Standzeiten von mindestens 15 Stunden gelangt. Beispielhaft für die so charakterisierten Hydroxylgruppen tragenden Amine seien genannt:

Di(-2-hydroxypropyl)-amin, Di(-2-hydroxybutyl)-amin, Di-(4-hydroxybutyl)-amin, N-Methylaminopropanol-2 und N-Ethylaminopropanol-2.

Als Reaktionskomponenten für die erfindungsgemässen hydroxylhaltigen Acrylharze zur Herstellung von Überzügen und Beschichtungen kommen marktübliche Lackpolyisocyanate in Frage, deren Herstellung beispielsweise in den folgenden Patentschriften behandelt wird: US-A-3 124 605, 3 358 010, 3 903 126, 3 903 127, 3 976 622, 3 183 112, 3 394 111, 3 645 979, 3 919 218, GB-A-1 060 430, 1 234 972, 1 506 373 und 1 458 564.

Es handelt sich hierbei um Lackpolyisocyanate, die Biuretgruppen, Urethangruppen und Isocyanuratgruppen aufweisen. Die Mengenverhältnisse der aus Polyol- und Vernetzerkomponente bestehenden Beschichtungsmittel werden so gewählt, dass für jede Hydroxylgruppe der im Reaktionsgemisch vorliegenden, Hydroxylgruppen aufweisenden Komponenten 0,2 bis 5, vorzugsweise 0,7 bis 1,3, Isocyanatgruppen zur Verfügung stehen. Grundsätzlich ist es auch möglich, die Isocyanatkomponente in mit Blockierungsmittel für Isocyanatgruppen wie z.B. Phenolen, ε-Caprolactam, Malonsäurediethylester oder Acetessigsäureethylester blockierter Form einzusetzen, so dass es sich bei derartigen Beschichtungsmitteln um hitzevernetzbare Einbrennlacke handelt.

Es ist auch möglich, während oder nach der Herstellung der erfindungsgemässen hydroxylhaltigen Acrylatharze sogenannte reaktive Verdünner einzusetzen, d.h. insbesondere niedermolekulare Di- bzw. Polyole, die nicht an der Polymerisationsreaktion teilnehmen, jedoch gegenüber Isocyanatgruppen reaktionsfähig sind und daher in das Polyurethan eingebaut werden. Neben den in der DE-B-2 304 893 offenbarten geeigneten reaktiven Verdünnern sind natürlich auch überschüssig eingesetzte Hydroxylgruppen tragende Amine als solche Reaktivverdünner anzusehen. Letztere sollten jedoch nicht in grösseren Mengen als drei Prozent, bezogen auf das Polyacrylat, vorhanden sein, um Trübungen der Polyol-Vernetzter-Mischung und der ausgehärteten Lackfilme zu vermeiden. Die in der DE-B-2 304 893 genannten Reaktivverdünner werden neben oder anstelle der genannten Lösungsmittel in Mengen von 0 bis 50 Gew.-%, bezogen auf das Monomerengemisch, eingesetzt.

Die Überzugs- bzw. Beschichtungsmittel können neben den bereits genannten Lösungsmitteln bzw. reaktiven Verdünnern weitere in der Polyurethanlacktechnologie übliche Hilfs- und Zusatzmittel wie z.B. Verlaufsmittel auf Celluloseesterbasis, Oligoalkylacrylate, Siliconöle, Weichmacher wie Phosphorsäureester, Phthalsäureester, Pigmente und Füllstoffe, viskositätskontrollierende Zusätze wie Bentonite und Kieselsäureester, Mattierungsmittel, Härtungsbeschleuniger wie Mangan-, Blei- oder Kobaltnaphthenate sowie Zinnbeschleuniger, Calciumsalze, Zinksalze, Basen wie Diazabicyclooctan, Säuren wie Phosphorsäure, ethanolische Salzsäure, Weinsäure oder Zitronensäure in Mengen von ca. 0,1 - 20 Gew.-%, bezogen auf die Gesamtmenge des Beschichtungsmittels, enthalten.

Die einzusetzenden Beschichtungsmittel können nach allen beliebigen Methoden der Lacktechnologie wie z.B. Spritzen, Streichen, Tauchen oder Walzen auf beliebige Substrate wie z.B. Metalle, Holz, Mauerwerk, Beton, Glas, Keramik, Kunststoffe, Textilien oder Papier aufgetragen werden. Sie zeichnen sich durch lange Standzeiten, schnelle Trocknungszeiten, guten Verlauf, sowie Farbtreue bzw. Klarheit und hervorragende mechanische Eigenschaften der mit ihnen erhaltenen Beschichtungen aus.

Es ist ein weiterer Vorteil der erfindungsgemässen Acrylatharze, dass auch bei sehr hohen Hydroxylgehalten (über 5% auf Acrylatharz bezogen) ausgezeichnete Verdünnbarkeiten der Polyol-Vernetzer-Mischungen ohne Trübungserscheinungen mit einer grossen Anzahl von üblichen Lacklösungsmitteln, insbesondere Aromaten wie Toluol oder Xylol, erhalten werden.

Die nachstehenden Beispiele dienen der näheren Erläuterung der Erfindung. Prozentangaben beziehen sich auf das Gewicht, sofern nicht anders vermerkt.

## Beispiele 1 bis 5

Herstellung von glycidylhaltigen Copolymerisaten

In einem 40-l-Rührautoklaven werden 8133 Gew.-Teile Xylol unter Stickstoffatmosphäre vorgelegt und auf 120°C erwärmt. Bei dieser Temperatur, die kontrolliert gehalten wird, werden die Lösungen der in Tabelle 1 angegebenen Zusammensetzungen innerhab von ca. 4 Stunden unter Luftausschluss zudosiert. Zur Nachaktivierung werden 93 Gew.-Teile t-Butylperbenzoat in 4067 Gew.-Teilen n-Butylacetat gelöst zugegeben. Man rührt 6-8 Stunden bei 120°C nach und erhält die ebenfalls in Tabelle 1 angegebenen Konzentrationen, Viskositäten und Umsätze.

Tabelle 1

| Beispiel | 1 | 2 | 3 | 4 | 5 |
|---|---|---|---|---|---|
| Glycidylmethacrylat (Gew.-Teile) | 3131 | 3131 | 3131 | 3131 | 3131 |
| Styrol (Gew.-Teile) | 7167 | 8585 | 9199 | 7867 | — |
| n-Butylacrylat (Gew.-Teile) | 5099 | 3680 | 3067 | 3067 | 3067 |
| Methylmethacrylat (Gew.-Teile) | — | — | — | 1333 | 9200 |
| t-Butylperoctoat (Gew.-Teile) | 500 | 500 | 500 | 500 | 500 |
| Umsatz (Gew.-%) | 98,0 | 98,5 | 98,3 | 98,7 | 99,2 |
| Konzentration (Gew.-%) | 54,8 | 56,3 | 56,5 | 55,7 | 55,9 |
| Viskosität (bei 20°C) (mPa.s) | 450 | 500 | 570 | 1100 | 3050 |

Das Copolymerisat enthielt copolymerisierte Einheiten der nachstehenden Monomeren in Gew.-%

| | Styrol | n-Butyl-acrylat | Methyl-meth-acrylat | Glycidyl-meth-acrylat |
|---|---|---|---|---|
| Beispiel 1 | 46,55 | 33,12 | — | 20,34 |
| Beispiel 2 | 55,76 | 23,90 | — | 20,34 |
| Beispiel 3 | 59,75 | 19,92 | — | 20,34 |
| Beispiel 4 | 51,09 | 19,92 | 8,66 | 20,34 |
| Beispiel 5 | — | 19,92 | 59,75 | 20,34 |

Umsetzung der Copolymerisate mit OH-Gruppen tragenden Aminen

Die Copolymerisate der Beispiele 1-5 werden jeweils unter Rühren mit den in Tabelle 2 angegebenen Mengen an Hydroxyalkylamin bei 70°C, 80°C und 90°C abgemischt. Danach wird 48 Stunden bei 70°C, 30 Stunden bei 80°C und 24 Stunden bei 90°C gerührt. Bei den Beispielen 4 und 5 wird nur bei 90°C 24 Stunden lang gerührt. Kürzere Rührzeiten sind natürlich möglich (vgl. Beispiel 6). Man erhält klare, leicht gelblich gefärbte Polyacrylatlösungen (Farbzahlen 3-4) mit den ebenfalls in Tabelle 2 aufgeführten Eigenschaften.

Tabelle 2

| Beispiel | Di-(2-hydroxy-propyl)-amin (Gew.-Teile) | Reaktions-temperatur (°C) | Konzentration (Gew.-%) | Umsatz bezogen a. Oxiran-gruppen % | Viskosität (mPa.s) | OH-Zahl (mgKOH/g Lösung) |
|---|---|---|---|---|---|---|
| 1 a | 3372 | 70 | 59,7 | 99,5 | 4730 | 130 |
| 1 b | 3372 | 80 | 63,4 | 99,5 | 10000 | 123 |
| 1 c | 3372 | 90 | 63,2 | 99,0 | 9500 | 132 |
| 2 a | 3372 | 70 | 63,0 | 99,3 | 11700 | 132 |
| 2 b | 3372 | 80 | 62,5 | 99,5 | 10600 | 131 |
| 2 c | 3372 | 90 | 62,2 | 99,0 | 11500 | 132 |
| 3 a | 3372 | 70 | 62,6 | 99,0 | 14400 | 134 |
| 3 b | 3372 | 80 | 61,5 | 99,5 | 10400 | 132 |
| 3 c | 3372 | 90 | 63,5 | 99,2 | 18400 | 132 |
| 4 | 3372 | 90 | 64,2 | 93,5 | 23400 | 133 |
| 5 | 3372 | 90 | 65,2 | 93,2 | 63500 | 137 |

Vergleichsbeispiel 1
(mit Diethanolamin als Hydroxyalkylamin)

Das Präpolymere wird mit denselben Monomermengen und auf dieselbe Weise, wie in Beispeil 1 beschrieben, hergestellt. Danach werden unter Rühren bei 90°C 2662 Gew.-Teile Diethanolamin zudosiert, und es wird 24 Stunden bei dieser Temperatur gerührt. Man erhält eine klare, leicht gelbliche Lösung, die folgende Eigenschaften aufweist:

| | |
|---|---|
| Umsatz (bezogen auf Oxirangruppen): | ca. 99,0% |
| Konzentration: | 60,3 Gew.-% |
| Viskosität: | 5700 mPa.s |
| OH-Zahl: | 135 |

Beispiel 6

In einem 6-l-Rührautoklaven werden 1220 Gew.-Teile Xylol unter Stickstoffatmosphäre vorgelegt und auf 120°C erwärmt. Bei dieser Temperatur, die kontrolliert gehalten wird, wird die folgende Mischung innerhalb von ca. 4 Stunden unter Luftausschluss zudosiert:

| | |
|---|---|
| Glycidylmethacrylat: | 470 Gew.-Teile |
| Styrol: | 1380 Gew.-Teile |
| n-Butylacrylat: | 460 Gew.-Teile |
| t-Butylperoctoat: | 75 Gew.-Teile |

Zur Nachaktivierung werden 14 Gew.-Teile t-Butylperbenzoat in 610 Gew.-Teilen n-Butylacetat gelöst zugegeben. Man rührt 6-8 Stunden bei 120°C nach. Danach kühlt man auf 90°C herunter und dosiert 613 Gew.-Teile Di-(2-hydroxybutyl)-amin zu und r:hrt 12 Stunden bei dieser Temperatur nach. Man erhält eine klare, leicht gelbliche Lösung, die folgende Eigenschaften aufweist:

| | |
|---|---|
| Umsatz (bezogen auf Oxirangruppen): | 98,0% |
| Konzentration: | 61,8 Gew.% |
| Viskosität: | 5120 mPa.s |
| OH-Zahl: | 120 |

Das Copolymerisat besteht aus copolymerisierten Einheiten (in Gew.-%) von 59,74 Gew.-% Styrol, 19,91 Gew.-% Glycidylmethacrylat und 20,35 Gew.-% n-Butylacrylat.

Nachstehend wird die Herstellung einiger erfindungsgemäss geeigneter Beschichtungsmittel bzw. ihre Verwendung gezeigt. In den nachstehenden Beispielen wurden folgende Ausgangsmaterialien eingesetzt: Acrylharze gemäss Beispielen 1a, 1b, 1c bis 6 entsprechend den gleichnamig numerierten Beispielen und

Polyisocyanat I, eine

75 gew.%ige Lösung eines Biuretgruppen aufweisenden Polyisocyanats in Xylol/Ethylglykolacetat (1 : 1) auf Basis von Hexamethylendiisocyanat. Der NCO-Gehalt der Lösung beträgt 16,5%.

Die in den nachfolgenden Beispielen beschriebenen Lacke stellten Klarlacke mit einem Feststoffgehalt von ca. 40 Gew.-% dar. Die zusätzliche Verdünnung erfolgte durch Verwendung von Xylol bzw. eines Gemisches aus gleichen Gew.-Teilen Xylol, n-Butylacetat und Ethylglykolacetat. Die einzelnen Komponenten wurden in einem NCO/OH-Äquivalentverhältnis von 1 : 1 entsprechenden Mengen eingesetzt. Weitere Zusatzmittel wurden nicht hinzugefügt.

Beispiel 7

Verträglichkeit der Acrylharze in Zweikomponentenlacken mit dem Polyisocyanat I (Verdünnungsmittel: Xylol).

| Acrylharz | 1a | 1b | 1c | 2a | 2b | 2c | 3a | 3b | 3c | 4 | 5 | 6 | Vergleich 1 |
|---|---|---|---|---|---|---|---|---|---|---|---|---|---|
| Lösung | + | + | + | + | + | + | + | + | + | + | + | + | – |
| Film | + | + | + | + | + | + | + | + | + | + | + | + | – |

Kennzeichen der Verträglichkeit
+: einwandfrei verträglich
–: nicht verträglich

Beispiel 8

Standzeit und Viskositätsverhalten von Zweikomponentenlacken aus Acrylharzen und Polyisocyanat I.

| Acrylharz | 1a | 1b | 1c | 2a | 2b | 2c | 3a | 3b | 3c | 4* | 5* | 6* | Vergleich 1* |
|---|---|---|---|---|---|---|---|---|---|---|---|---|---|
| Standzeit in Stunden | 27 | 24 | 24 | 24 | 23 | 21 | 22 | 21 | 18 | 19,5 | 23,5 | 29 | 3,5 |
| Auslaufzeit (DIN-Becher) in sec. nach | | | | | | | | | | | | | |
| 0 Stunden | 18 | 18 | 19 | 18 | 18 | 18 | 19 | 19 | 20 | 19 | 18 | 19 | 19 |
| 4 Stunden | 19 | 18 | 19 | 19 | 19 | 20 | 20 | 20 | 20 | 20 | 18 | 19 | geliert |
| 8 Stunden | 20 | 20 | 20 | 20 | 20 | 20 | 20 | 20 | 23 | 21 | 20 | 21 | |

* Verdünnungsmittel: Xylol/Ethylglykolacetat/n-Butylacetat

Wie ersichtlich, weisen Zweikomponentenlacke aus erfindungsgemässen Acrylharzen und Polyisocyanat praxisgerechte Standzeiten auf, während das Produkt gemäss Vergleich 1 schon nach 3,5 Stunden geliert.

Beispiel 9

Dehnbarkeit und Pendelhärte von Zweikomponentenlacken aus Acrylharz und Polyisocyanat I.

| Acrylharz | 1b | 1c | 2a | 2b | 2c | 3a | 3b | 3c | 4 | 5 |
|---|---|---|---|---|---|---|---|---|---|---|
| Erichsen-Tiefung nach DIN 53156 nach 14 Tagen in mm | 9,3 | 9,3 | 9,3 | 9,1 | 9,1 | 9,1 | 9,1 | 8,6 | — | — |
| Pendelhärte nach König in sec. nach DIN 53157 | | | | | | | | | | |
| nach 1 Tag | 76 | 60 | 94 | 108 | 108 | 106 | 121 | 120 | 73 | 101 |
| nach 7 Tagen | 193 | 193 | 197 | 199 | 197 | 196 | 196 | 199 | 195 | 182 |

Die Werte für Vergleich 1 wurden nicht gemessen, da derartige Kombinationen in der Praxis wegen der Unverträglichkeit und zu kurzen Standzeiten nicht eingesetzt werden können.

**Patentanspruch**

Verwendung von Umsetzungsprodukten aus einem Acrylatharz aus copolymerisierten, statistisch verteilten Einheiten von

A) 3-30 Gew.-% des Glycidylesters der Acrylsäure od. Methacrylsäure bzw. Vinylglycidylether oder deren Mischungen;

B) 0-20 Gew.-% eines Hydroxyalkylesters der Acrylsäure oder Methacrylsäure mit 2 bis 4 C-Atomen im Hydroxyalkylester oder deren Mischungen;

C) 5-80 Gew.-% Styrol, α-Methylstyrol, o-Chlorstyrol, p-Chlorstyrol, o-, m- oder p-Methylstyrol, p-tert.-Butylstyrol, Methacrylsäuremethylester, Acrylnitril oder Methacrylnitril oder deren Mischungen;

D) 5-70 Gew.-% eines Acrylsäureesters mit 1 bis 12 C-Atomen im Alkoholrest oder eines Methacrylsäureesters mit 2 bis 12 C-Atomen im Alkoholrest oder deren Mischungen;

E) 0-10 Gew.-% einer α,β-monoolefinisch ungesättigten Mono- oder Dicarbonsäure mit 2 bis 5 C-Atomen oder eines Maleinsäuremonoesters mit 2 bis 14 C-Atomen im Alkoholrest oder deren Mischungen mit mindestens einem Hydroxylgruppen tragenden Amin der Formel

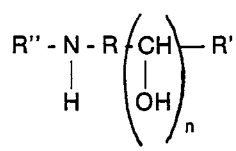

worin

n = 1 bis 4,
R = eine Alkylengruppen mit 1-4 C-Atomen,
R' = Alkyl mit 1-4 C-Atomen,
R'' = Alkyl mit 1-4 C-Atomen oder 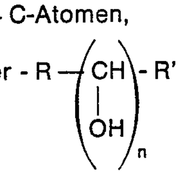

R und R' zusammen mit 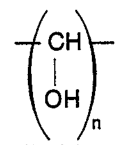 einen acyclischen 5- oder 6gliedrigen Ring = 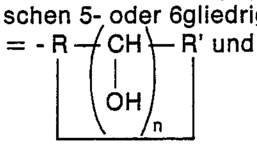 und

R' und R'' zusammen mit 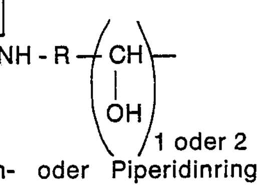 einen Pyrrolidin- oder Piperidinring bedeuten,

wobei ein Epoxidäquivalent des Acrylatharzes mit 0,7 bis 1 NH-Äquivalent des Hydroxylgruppen tragenden Amins bei 50 bis 200°C unter weitgehender Erhaltung der OH-Funktion reagiert haben, als Vernetzungskomponente für Verbindungen, die mehr als eine Isocyanatgruppe tragen bzw. zu bilden vermögen.

**Claim**

Use of reaction products of an acrylate resin of copolymerised, statistically distributed units of

A) 3 to 30% by weight of the glycidyl ester of acrylic acid or methacrylic acid or of vinyl glycidyl ether, or any mixture thereof;

B) 0 to 20% by weight of a hydroxyalkyl ester of acrylic acid or methacrylic acid containing from 2 to 4 carbon atoms in the hydroxyalkyl radical, or any mixture thereof;

C) 5 to 80% by weight of styrene, α-methyl styrene, o-chlorostyrene, p-chlorostyrene o-, m- or p-methyl styrene, p-tert.-butyl styrene, methyl methacrylate, acrylonitrile or methacrylonitrile, or any mixture thereof;

D) 5 to 70% by weight of an acrylic acid ester containing from 1 to 12 carbon atoms in the alcohol radical or of a methacrylic acid ester containing from 2 to 12 carbon atoms in the alcohol radical, or any mixture thereof; and

E) 0 to 10% by weight of an α,β-mono-olefinically unsaturated monocarboxylic or dicarboxylic acid containing from 2 to 5 carbon atoms or of a maleic acid mono-ester containing from 2 to -4 carbon atoms in the alcohol radical, or any mixture thereof, with at least one amine containing hydroxyl groups of the formula:

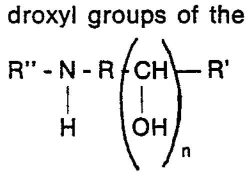

in which

n = 1 to 4,

R = an alkylene group containing from 1 to 4 carbon atoms,

R' = alkyl containing from 1 to 4 carbon atoms,

R'' = alkyl containing from 1 to 4 carbon atoms

or 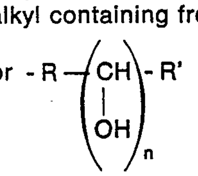

or in which

R and R' together with 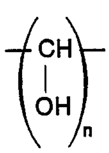 represent an ali-

cyclic 5- or 6-membered ring = 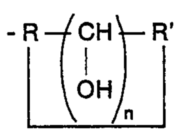 or

R' and R'' together with 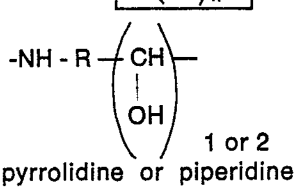

represent a pyrrolidine or piperidine ring,

at a temperature of from 50 to 200°C, wherein one epoxide equivalent of the acrylate resin has been reacted with from 0.7 to 1 NH equivalent of the amine containing hydroxyl groups with the OH function remaining largely intact, as a crosslinking component for compounds which contain or are capable of forming more than one isocyanate group.

## Revendication

Utilisation, comme composants de réticulation pour des composés comportant ou pouvant former plus d'un groupe isocyanate, de produits réactionnels d'une résine acrylate constituée des motifs copolymérisés suivants répartis de manière statistique:

A) 3-30% en poids de l'ester glycidylique de l'acide acrylique ou de l'acide méthacrylique, d'éther vinylglycidylique ou de leurs mélanges;

B) 0-20% en poids d'un ester hydroxyalkylique de l'acide acrylique ou de l'acide méthacrylique contenant 2 à 4 atomes de carbone dans le groupe hydroxyalkyle, ou de leurs mélanges;

C) 5-80% en poids de styrène, d'α-méthylstyrène, d'o-chlorostyrène, de p-chlorostyrène, d'o-, de m- ou de p-méthylstyrène, de p-tert-butylstyrène, d' ester méthylique de l'acide méthacrylique, d'acrylonitrile ou de méthacrylonitrile, ou de leurs mélanges;

D) 5-70% en poids d'un ester d'acide acrylique contenant 1 à 12 atomes de carbone dans le radical alcool, ou d'un ester d'acide méthacrylique contenant 2 à 12 atomes de carbone dans le radical alcool, ou de leurs mélanges;

E) 0-10% en poids d'un acide mono- ou dicarboxylique à insaturation α,β-mono-oléfinique contenant 2 à 5 atomes de carbone, ou d'un monoester d'acide maléique contenant 2 à 14 atomes de carbone dans le radical alcool, ou de leurs mélanges avec une amine comportant au moins un groupe hydroxy et répondant à la formule:

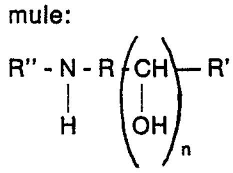

où

n = 1 à 4,

R = groupe alkylène contenant 1 à 4 atomes de carbone,

R' = groupe alkyle contenant 1 à 4 atomes de carbone,

R'' = groupe alkyle contenant 1 à 4 atomes de carbone ou 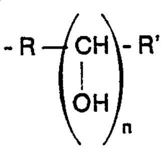

R et R', ensemble avec $-\left(\begin{array}{c}CH\\|\\OH\end{array}\right)_n-$, représentent un noyau alicyclique pentagonal ou hexagonal = 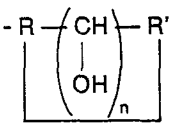

R' et R'', ensemble avec $-NH-R-\left(\begin{array}{c}CH\\|\\OH\end{array}\right)_{1\ ou\ 2}-$ représentent un noyau pyrrolidine ou pipéridine, un équivalent époxy de la résine acrylate ayant réagi avec 0,7-1 équivalent NH de l'amine comportant des groupes hydroxy à une température de 50 à 200°C tout en maintenant essentiellement la fonction OH.